Europäisches Patentamt

European Patent Office

Office européen des brevets

(19)

(11) Publication number: **0 027 701**
A1

(12) # EUROPEAN PATENT APPLICATION

(21) Application number: **80303531.0**

(22) Date of filing: **08.10.80**

(51) Int. Cl.³: **F 24 D 3/00**
**F 28 F 1/16, F 24 D 3/10**
**//F24D19/02**

(30) Priority: **09.10.79 GB 7935071**

(43) Date of publication of application:
**29.04.81 Bulletin 81/17**

(84) Designated Contracting States:
**AT BE CH DE FR GB IT LI LU NL SE**

(71) Applicant: **STELRAD GROUP LIMITED**
**Newtown Road**
**Henley-on-Thames Oxfordshire, RG9 1HL(GB)**

(72) Inventor: **Renshaw, Edward James**
**Bridgend Haugh of Urr Castle Douglas**
**Kirkcudbrightshire Scotland(GB)**

(74) Representative: **Saunders, Harry**
**SAUNDERS & DOLLEYMORE 2 Norfolk road**
**Rickmansworth Hertfordshire WD3 1JH(GB)**

(54) **Domestic space-heating systems and radiators therefor.**

(57) In a domestic heating system, the radiators (4) are vertically mounted in corners of rooms and each comprises a one-piece, finned, extruded aluminium cooling element.

EP 0 027 701 A1

./...

Croydon Printing Company Ltd.

FIG.1

-1-

## DOMESTIC SPACE-HEATING SYSTEMS AND RADIATORS THEREFOR

This invention relates to domestic heating systems of the kind comprising a hot water boiler, at least one space-heating radiator, and pipework connecting the radiator or radiators in closed circuit with the boiler; and to radiators for such a system. Such a system will be called a "heating system of the kind hereinbefore specified".

The term "domestic" is to be understood not to imply any restriction to dwelling-houses or apartments, but rather to signify applicability to any building or part of a building.

Radiators for domestic space-heating purposes take many forms. The most usual form in European countries is a wall-mounted radiator comprising a pair of horizontal waterways, spaced one above the other and joined by vertical waterways, the water being introduced at one end of the radiator and removed either at the other end or returned to an outlet at the same end as the inlet, or being introduced and removed through a suitable coaxial inlet/outlet device which is usually fixed to a single tapping halfway along the lower waterway of the radiator.

Another form of radiator consists of a fabricated, finned tube running horizontally along the skirting of a room.

In all these known kinds of radiator, water is introduced into, and removed from, the radiator at a single level or at two respective levels not far from the floor of the room. Whilst a skirting radiator does not occupy valuable wall space, a wall-mounted radiator usually has to be arranged where, if it were not present, there could be placed a free-standing piece of furniture against the wall, or a picture or a piece of furniture mounted on the wall. Thus conventional forms of radiator impose undesirable limitations on the use of wall space, and on the positioning of furniture that might be damaged by the heat from the radiator. Furthermore, seating placed too near a radiator may cause discomfort to the occupants due to the local heat.

The above disadvantages are particularly severe in a small room, and particularly where the room is part of a small building or a small unit, such as an apartment or group of offices none of which is large.

The invention, in a first aspect, provides a heating system of the kind hereinbefore specified, in which each radiator is mounted in the corner formed by two contiguous walls of a room, and is in the form of a slender, vertically-extending column, comprising essentially a hollow metallic element of elongate form and provided with an extending cooling surface in the form of external fins. Such a radiator should not be confused with the well-known type of central heating radiator known as a "column radiator", which consists of a plurality of hollow cast or pressed sections joined together in a horizontally-extending array to form horizontal waterways which are interconnected by the vertically-extending hollow interior of each section. In the slender vertical radiators proposed in relation to the present invention, the column has a vertical length substantially greater than any of its horizontal dimensions.

It will be understood that a wall, in the sense in which the term is used herein, includes any portion of a wall, such as the back or a side of an alcove.

The invention, in particular, provides by itself or as part of a heating system of the kind hereinbefore specified, a space-heating radiator having a vertical length substantially greater than any of its overall horizontal dimensions and being mounted in the angle between two walls, the radiator comprising a single, vertical, hollow, elongate, finned metallic element defining at least one vertical waterway therethrough, and having an extended external cooling surface in the form of longitudinal fins. The hollow elongate element is preferably formed by extrusion.

The radiator may conveniently be connected at its top and bottom in the closed circuit for flow of hot water generally vertically through it. For this purpose it is most convenient to run a common flow main, i.e. the main pipe through which water passes from the boiler, and the pipework of each of a plurality of branch pipes leading to the radiators, above or in the ceiling, whilst a return main, together with further branch pipework connecting the radiators to the latter, is disposed below or in the floor. It will however be understood that there may be a plurality of parallel vertical waterways in the hollow element, connected to form a multi-pass radiator or so connected that water passes up all the waterways in parallel or down them all in parallel.

The hollow elongate element or elements of each radiator are preferably in the form of aluminium extrusions; indeed, substantially the whole of the radiator may be made in aluminium.

The slender, upright form of the radiators in the preferred versions of the heating system according to this invention render them particularly suitable for siting in corners of rooms, where they are less likely to cause a direct obstruction or to restrict the convenient or comfortable siting of furniture. The invention accordingly provides, in a third aspect thereof, a central heating radiator comprising a single, extruded, hollow, one-piece aluminium heating element having an extended external surface in the form of longitudinal fins, which define, in plan view, a shape which is generally triangular, i.e. bounded by an imaginary "envelope" of roughly triangular shape, this shape being particularly suitably adapted for mounting vertically in the angle between two walls of a room, said element having means for connecting its hollow interior to hot water inlet means at one end of the element and outlet means at the other. The finned heating element can be masked from view by a front panel extending at 45 degrees to the walls, and this front panel can be an aluminium extrusion such as to give a pleasing aesthetic effect. The front panel preferably does not touch the walls, so that a suitable gap is left at either side of the panel for free flow of air.

A domestic heating system in a preferred form according to the invention will now be described, by way of example, with reference to the drawings hereof, in which:-

Figure 1 is a schematic diagram showing the layout of the system as applied to a small, single-storey building;

Figure 2 is a sectional side elevation, taken on the line II-II in Figure 3, showing a central heating radiator, in a preferred form according to the invention, mounted vertically in a corner of a room and forming part of a system such as that shown in Figure 1;

Figure 3 is a sectional front elevation, taken on the line III-III in Figure 2 or in the direction of the arrow III in Figure 4;

Figure 4 is a sectional plan view of the same radiator, taken on the line IV-IV in Figure 3;

Figure 5 is a view similar to Figure 4 but showing a radiator in a slightly modified form; and

Figure 6 shows a preferred arrangement for mounting a radiator according to the invention in a corner of a room.

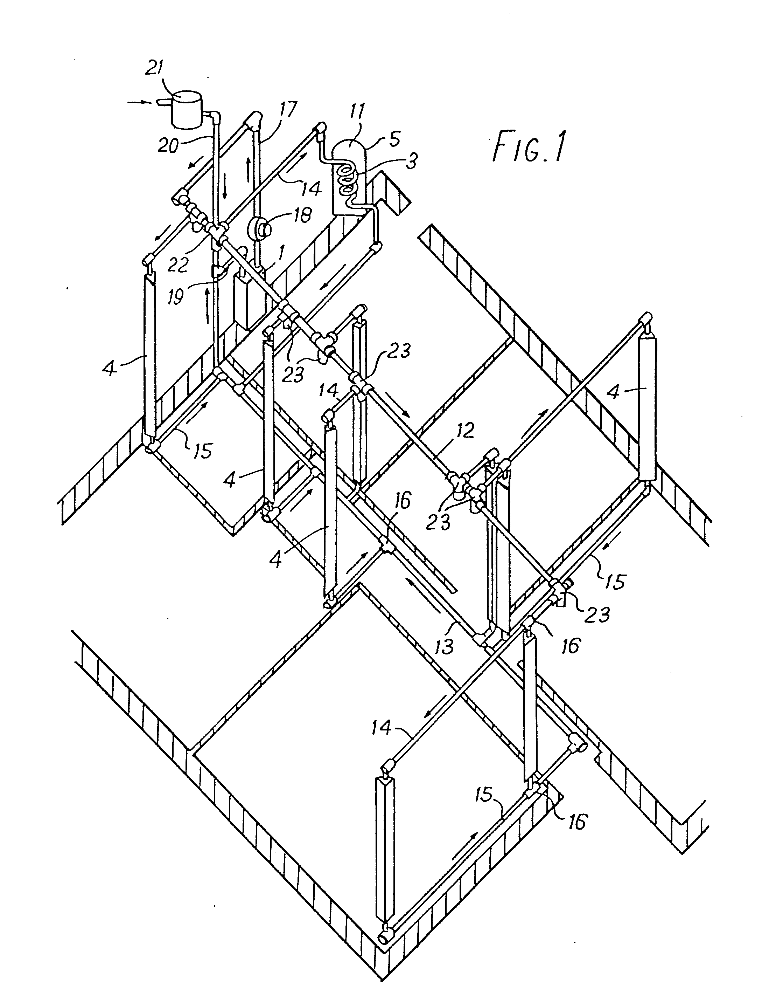

The heating system shown very diagrammatically in Figure 1 includes a hot water boiler 1, and nine heating elements 3,4 for delivering heat from water heated in the boiler. These elements consist of the primary element 3 of an indirect-heating hot water cylinder 5 of conventional pattern, for supplying domestic hot water (through pipes not shown) to conventional taps from its secondary side 11; and eight space heating radiators 4. The cylinder element 3 and radiators 4 are connected in a closed circuit with the boiler 1 by pipework 12,13,14,15,17,19.

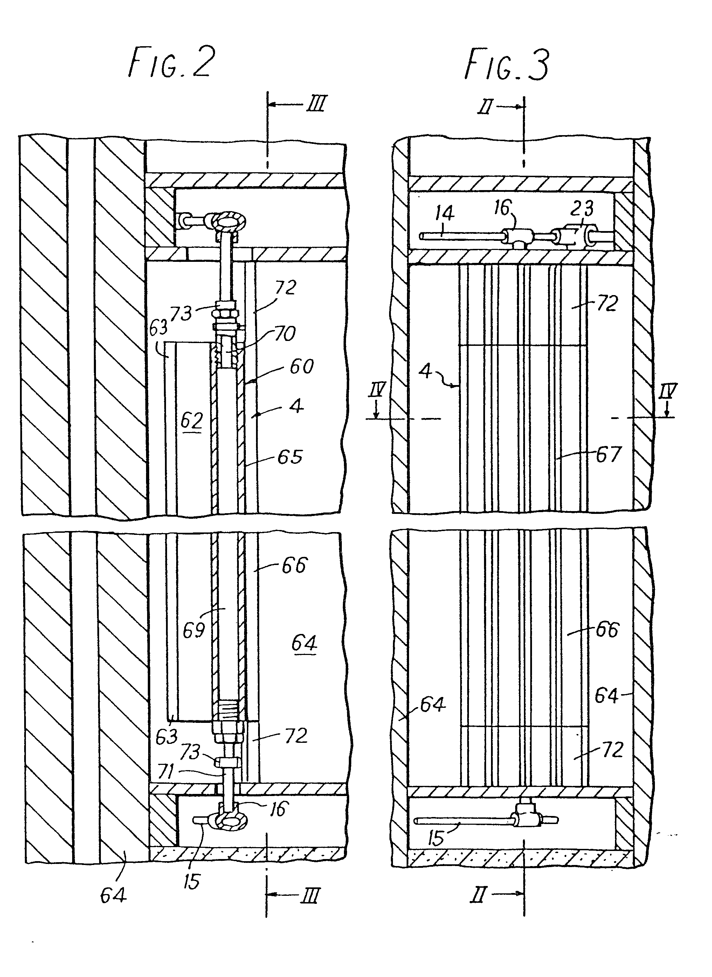

Figure 1 shows diagrammatically the outer walls 16 of a single-storey building such as a bungalow, and internal partition walls enclosing various rooms. There are two radiators 4 in each of the two largest rooms, and one each in the remaining rooms. It will be noted that each of the radiators 4 extends vertically upwards from the floor and is tucked into the corner at the junction of two walls. To this end the radiator has a vertical length substantially greater than any of its overall horizontal dimensions. A typical radiator 4 will

be described in detail hereinafter with reference to Figures 2 to 4.

The closed water circuit, as shown in Figure 1, includes a horizontal main flow pipe 12 which lies in or above the ceiling (not shown), and a horizontal main return pipe 13 which lies in or below the floor, parallel with the main flow pipe 12. The hot water cylinder element 3 is connected to the main pipes 12,13 by a loop comprising a loop flow pipe 14 and a loop return pipe 15, extending at right angles to the respective main pipes 12 and 13 and, again, arranged in or above the ceiling and in or below the floor, respectively. A similar loop is provided for each room, whereby the radiator in each room having a single radiator is served by its own flow and return pipes 14,15. In each room having more than one radiator, the radiators in that room are arranged in parallel with each other and served by a common flow pipe 14 and a common return pipe 15. The main pipes 12,13 are of larger diameter than the loop pipes. The main flow pipe 12 is connected to the boiler 1 by a boiler outlet pipe 17, in which an electrical water circulating pump 18 is arranged. The main return pipe 13 is connected to the boiler by a boiler return pipe 19, to which there may also be connected, in conventional manner, a downpipe 20 from a header tank 21 for automatically supplying make-up water to the system as necessary.

For each of the loops of the circuit there is a solenoid-actuated stop valve 22 or 23, which may conveniently be arranged, as shown in Figure 1, at the junction of the appropriate flow pipe 14 with the main flow pipe 12. Thus, the cylinder stop valve 22 is upstream of the cylinder primary element 3, whilst each room has a radiator stop valve 23 feeding the loop flow pipe 14 of the radiator loop in that room. Other pipe junctions are preferably formed by tee-pieces 16.

The various pipes in the circuit in this example are made of aluminium, as are the tee-pieces 16. The circulating pump 18 and the valves 22 and 23 may also be predominantly of aluminium.

It is not essential that the flow pipes 12,14 shall be at a different level from the return pipes 13,15. The radiators 4 may be constructed so that water is introduced into, and removed from each radiator at the same end of the radiator. This enables each flow pipe to be laid simultaneously with the corresponding return pipe and at the same level. The pipes may be supplied for this purpose joined together in pairs.

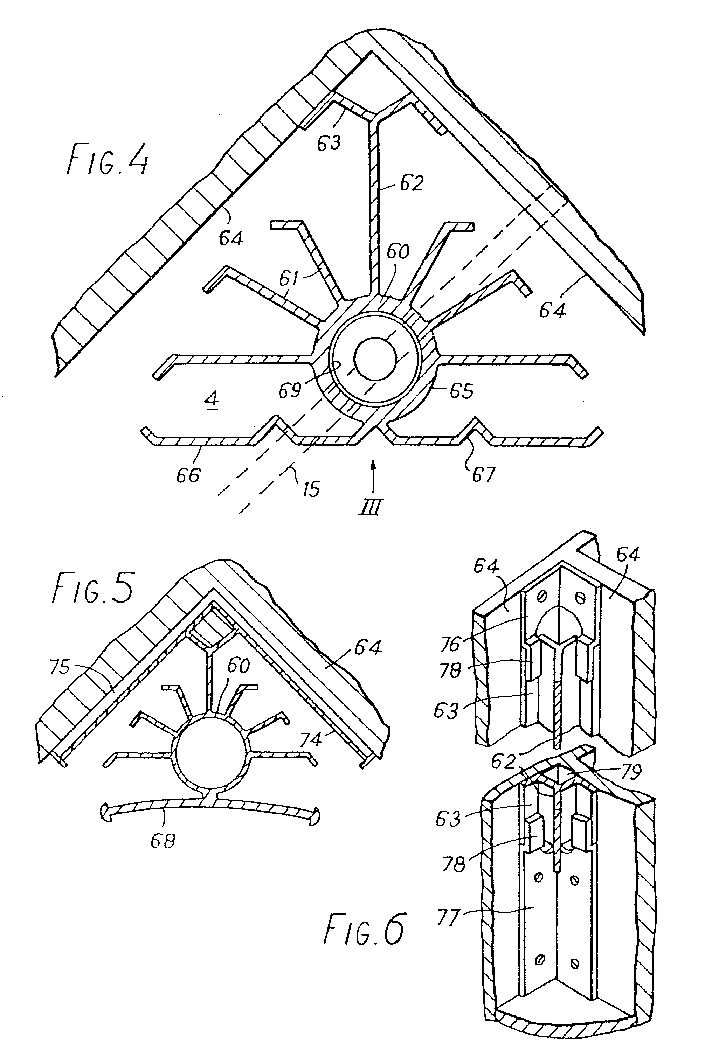

One of the radiators 4 in Figure 1 will now be described in greater detail, with reference to Figures 2 to 4. Only one radiator need be described, since all eight are in this example identical to each other. The principal component of the radiator is a vertical, hollow, elongate element 60 made from aluminium by extrusion and seen in cross-section in Figure 4. The element 60 has a generally-cylindrical core 65 provided with external, longitudinally-extending integral fins 61 to provide an extended cooling surface of large surface area. A further integral fin 62 extends radially from the core 65, to terminate at its outer edge in an integral bracket portion 63 for fixing to the walls 64 of the room. The front of the radiator comprises an integral panel 66 which conceals from view the core 65 and fins 61.

The front panel 66 forms part of the extended heating surface of the radiator, and may be of any desired cross-sectional shape to assist in efficient cooling and to provide a pleasing appearance. It may be anodised on its front surface and provided with decorative longitudinal grooves (such as the grooves 67 shown in Figure 4) or beads which also enlarge the cooling surface. Another shape of front panel is shown in Figure 5, in which the front panel, 68, is curved and has no longitudinal grooves. If the front surface is flat, or curved concavely outwards as in Figure 5, or convexly inwards in another example not shown, and is without interruptions such as grooves, it may be covered with a decorative covering such as wallpaper of a suitable kind resistant to heat. In any event the visible front surface of the radiator may, if desired, be painted; however the use of aluminium extrusions permits the visible part of the radiator to be made in a decorative manner that avoids any necessity for painting or covering, and which thus improves the cooling characteristics of the radiator.

The core 65 of the radiator element has a central waterway 69 which is threaded at each end, for connection to a hot water inlet pipe 70 at the top end and a water outlet pipe 71 at the bottom end. The inlet pipe 70 is connected to the outlet of the corresponding solenoid-operated stop valve 23, whilst the outlet pipe 71 is connected direct to the loop return pipe 15. For ease of accessibility, the solenoid valve 23 is preferably arranged below the ceiling as shown in Figure 3. The valve 23 and the pipes 70,71 can conveniently be hidden by short top and bottom panels 72, which may be attached in any suitable way; in Figure 2 they are shown attached to the respective pipes 70 and 71 by spring clips 73.

The radiator may be fitted in the corner of the room by any suitable means, but Figure 6 shows a preferred method in which a top angle bracket 76 is first fixed to the walls 64, and the radiator is then offered up to it so that the ends of the fixing bracket 63 of the radiator lie behind lugs 78 of the angle bracket 76 and the bracket 63 rests against the walls. A lower angle bracket 77 is then fixed to the walls so that similar lugs 78 of the bracket 77 hold the bottom end of the bracket 63. The lower front panel 72 can then be attached as already mentioned, so as to hide the bracket 77. Electric cables or wires (not shown) may if desired be led along the corner space 79 behind the bracket 63.

In another embodiment of radiator (not shown), the cooling element of the radiator is again in the form of a one-piece aluminium extrusion, but comprises two of the core portions 65, parallel to each other and each providing a run of waterway 69. The cores are connected, directly or indirectly, by vertical, integral webs and are provided with fins generally similar to the fins 61. The front panel, of any suitable shape, extends across the front of both of the cores, and may constitute the means by which the cores are joined together. The waterways are connected at the top or at the bottom by a suitable short pipe or header, so as to be in series with each other (or at both ends if they are to be in parallel with each other). If the waterways are in series, the inlet and outlet pipes 70,71 are both connected with the element at the top or the bottom, so as to feed water into one end of the waterway and remove it from the other. If the runs of waterway are connected in parallel, the inlet and outlet of the resulting waterway will of course be at opposite ends of the element. For some applications series connection may be an advantage, in that the flow and return pipes 14,15 of each loop can be laid at the same level, as can the main flow and return pipes 12 and 13.

It will of course be understood that there are a very large number of possible variations of design of radiator cooling element, given the principle of using an aluminium extrusion. Yet another possibility is to provide two coaxial runs of waterway within a single core portion of the cooling element.

In the modified form of radiator shown in Figure 5, the fixing bracket, 74, is extended to include integral plates at right angles to each other, these plates being attached (again by any suitable means, not shown) against the respective walls 64 but separated therefrom by thermal insulating material 75, so as to reduce conduction of heat into the walls.

In a typical example of a radiator as shown in Figures 2 to 4, for mounting in a room having the regulation height of 2.28 metres (7ft 6in) from floor to ceiling, the cooling element 65 has a length of 2.13 metres (7ft 0in) and the bore of the waterway 69 is 1.27 cm (0.5 in). In a so-called "low energy" house provided with wall and ceiling insulation and double-glazed windows, one such radiator, or at most two, will be sufficient for normal space heating of even the largest rooms normally likely to be provided. However, more radiators can of course be provided if necessary. In this connection it should be noted that the radiators need not actually be corner mounted, but may if desired be fixed on a flat wall, the profile of the integral fixing bracket 63 or 74 being altered accordingly. The design of the cooling fins 61 and the front panel 66 may also be altered for radiators for mounting on a flat wall; for instance the front panel may be curved towards the walls at its sides, so as to hide as much as possible of the cooling fins 61 whilst still leaving suitable gaps at the sides for proper circulation of air to and from the fins 61.

CLAIMS

1.      A domestic heating system comprising a hot water boiler (1), at least one space-heating radiator (4), and pipework (12-15) connecting the radiator or radiators in closed circuit with the boiler, characterised in that the radiator or each radiator (4) has a vertical length substantially greater than any of its overall horizontal dimensions and is mounted in the angle between two walls (64), the radiator (4) comprising a single vertical, hollow, elongate, metallic element (60) defining at least one vertical waterway (69) therethrough and having an extended external cooling surface in the form of longitudinal fins (61,62).

2.      A heating system according to Claim 1, wherein the said single hollow element (60) of the or each radiator (4) defines a plurality of parallel runs of vertical waterway connected in series or in parallel with each other.

3.      A heating system according to Claim 1 or Claim 2, wherein the or each hollow elongate element (60) is an externally longitudinally-finned member formed by extrusion.

4.      A heating system according to any one of Claims 1 to 3, wherein the or each said metallic element (60) is of aluminium.

5.      A heating system according to any one of the preceding claims, wherein the pipework (12-15), joining the boiler (1) and radiator or radiators (4) in the closed circuit, is of aluminium.

6.      A domestic space-heating radiator characterised by a single, extruded, hollow, one-piece aluminium heating element (60) having an extended external cooling surface in the form of longitudinal fins (61,62), defining in plan a generally-triangular overall shape whereby the radiator can be fitted vertically in the angle between two walls (64) of a room, said element having means for connecting its hollow interior (69) to hot water inlet means at one end of the element and outlet means at that end or at the other end.

FIG.1

## FIG.2

## FIG.3

FIG.4

FIG.5

FIG.6

European Patent Office

**EUROPEAN SEARCH REPORT**

Application number

EP 80 30 3531.0

| | DOCUMENTS CONSIDERED TO·BE RELEVANT | | CLASSIFICATION OF THE APPLICATION (Int Cl 3) |
|---|---|---|---|
| Category | Citation of document with indication, where appropriate, of relevant passages | Relevant to claim | |
| | FR - A - 945 504 (BURROWS) <br> * page 2, lines 69 to 77; <br> fig. 5, position 1 * <br> -- | 1,6 | F 24 D 3/00 <br> F 28 F 1/16 <br> F 24 D 3/10 <br> /F 24 D 19/02 |
| | DE - A - 2 033 216 (FRANTZ) <br> * complete document * <br> -- | 1-4 | |
| | DE - A - 2 314 159 (ALUSUISSE FRANCE S.A.) <br> * page 7, paragraphs 2, 3; page 5, paragraph 2 * <br> -- | 3,4 | **TECHNICAL FIELDS SEARCHED** (Int. Cl.3) |
| | DE - A - 2 308 480 (VIESSMANN) <br> * page 8, paragraph 1 * <br> -- | 5 | F 24 D 3/00 <br> F 24 H 3/00 <br> F 24 H 9/00 <br> F 28 D 1/00 |
| A | AT - B - 198 478 (TOBLER) <br> * complete document * <br> ---- | 1 | F 28 F 1/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 06-01-1981 | PIEPER |

EPO Form 1503.1 06.78